# EUROPEAN PATENT APPLICATION

(11) **EP 0 608 583 A2**
(43) Date of publication of application: **03.08.1994**
(21) Application number: 93203660.1
(22) Date of filing: 23.12.1993
(51) Int. Cl.: F16D 25/12, F16D 13/75, F16D 13/74

(54) **Friction torque transmitting assembly**

(30) Priority: 25.01.1993 US 8437
(71) Applicant: GENERAL MOTORS CORPORATION, Detroit Michigan 48202 (US)
(72) Inventor: Duhaime, Michael Leo, Novi, Michigan 48375 (US); Watson III, William Joseph, Bellevile, Michigan 48111 (US); Cullen, James Richard, Ypsilanti, Michigan 48198 (US); Patchel, Terrence James, Richmond, Michigan 48042 (US); Sherman, Douglas Richard, Tecumseh, Michigan 49286 (US); Signorelli, Joseph Anthony, Canton, Michigan 48187 (US)
(74) Representative: Denton, Michael John

(57) **Abstract**

A fluid operated friction torque transmitting assembly, such as a clutch has a first set of friction plates (24) connected with a housing (12), and a second set of friction plates (28) alternately spaced with the first set connected with an inner hub (14). One set of friction plates has a plurality of apertures (30) providing fluid communication between opposite sides thereof. During relative rotation between the first and second sets of friction plates, the apertures are effective to reduce viscous drag friction between adjacent friction surfaces of the first and second sets of friction plates.

## Description

This invention relates to friction torque transmitting assemblies, and more particularly, to the reduction of friction drag in such assemblies during an open running condition.

Currently, transmission designers and engineers rely on either spring assemblies or groove patterns to reduce viscous drag in an open running clutch. The spring assemblies are disposed to enforce separation between adjacent disc members. The groove patterns are formed in the friction materials in an effort to induce the fluid to evacuate from between adjacent friction surfaces.

A friction torque transmitting assembly in accordance with the present invention is characterised by the features specified in the characterising portion of Claim 1.

The present invention provides for reducing the viscous drag forces by piercing one set of the friction plates to provide apertures while leaving the adjacent friction plates unpierced. Testing has shown that this construction will significantly reduce the open running viscous drag between juxtaposed faces of a multi-plate friction device while not impairing or otherwise affecting the operating performance of the assembly.

It would appear that the apertures provide pressure balance on the friction plates and therefore encourage separation of adjacent friction plates during the open running condition.

It is therefore an object of this invention to provide an improved friction torque transmitting assembly having alternately spaced sets of annular friction plates connected to respective input and output members, wherein one set of annular friction plates has apertures formed therein to provide fluid communication between opposite sides of each friction plate in the set.

The present invention may also provide an improved annular friction plate for a friction torque transmitting assembly having sets of alternately spaced annular friction plates drivingly connected with respective inner and outer members, wherein each annular friction plate of one set of friction plates has a plurality of axially extending fluid passages formed intermediate the inner and outer peripheries of an annular area defining the plate, and the other set of friction plates has flat annular unfenestrated surfaces.

The present invention will now be described, by way of example, with reference to the following specification, and the accompanying drawings, in which:-
Figure 1 is a perspective view of a multi-plate friction torque transmitting assembly incorporating the present invention;
Figure 1A is a perspective view of two of the annular friction plates employed in the assembly of Figure 1;
Figure 2 is a cross-sectional view of the assembly depicted in Figure 1;
Figure 3 is a plan view of one embodiment of the friction disc employed with the present invention;
Figure 4 is another embodiment of the friction disc employed with the present invention;
Figure 5 is a curve or graph showing the relationship between the pressure and the radius of the friction plate pack in the friction torque transmitting assembly;
Figure 6 is a graph depicting the relationship of torque versus speed comparing conventional friction torque transmitting assemblies and an assembly incorporating the present invention; and
Figure 7 is a graph of torque versus speed in an assembly having conventional radial groove plates and the apertured plate of the present invention.

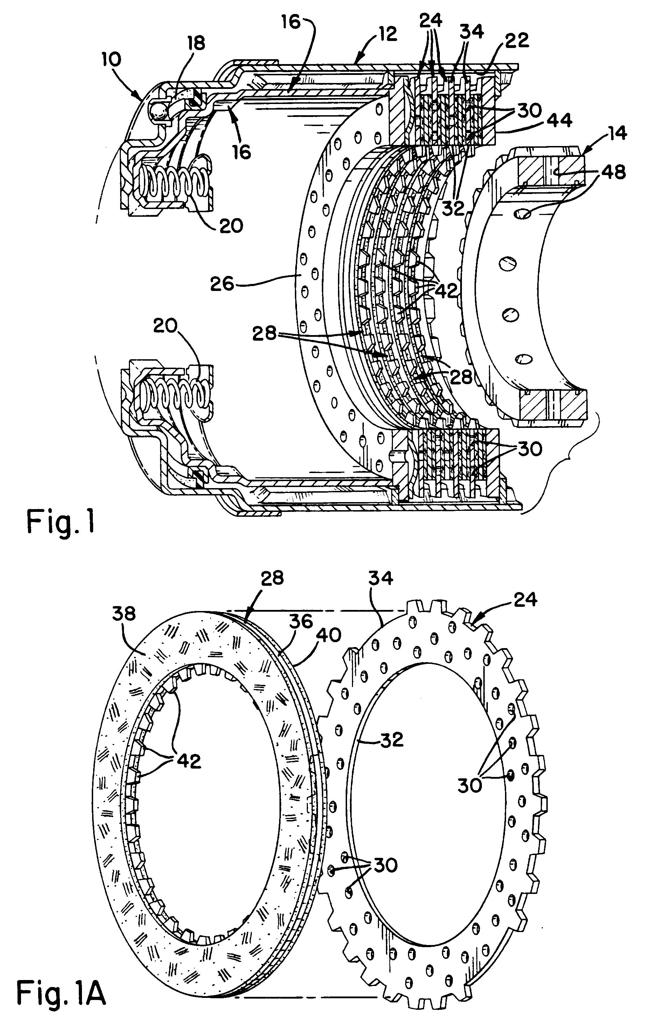

Referring to the drawings, wherein like characters represent the same or corresponding parts throughout the several views, there is seen in Figure 1 a friction torque transmitting assembly, such as a clutch 10, which has a rotatable input housing 12 and a rotatable output hub 14. The input housing 12 cooperates with a piston 16 to form a fluid chamber 18 which is pressurised to cause the piston 16 to move axially in response to fluid pressure.

A return spring assembly 20 is operatively connected between a rotary portion of an input member, not shown, and the piston 16 to urge the piston 16 in a disengaged direction when the pressure in the fluid chamber 18 is relieved. This piston 16 operation is a well known function and is similarly used in both clutches and brakes.

The input housing 12 has a splined inner diameter 22 to which is connected a plurality of friction plates 24 and a pressure plate 26. The friction plates 24 are alternately spaced with friction plates 28 which are splined to the output hub 14.

When the piston 16 is pressurised by fluid in fluid chamber 18, the pressure plate 26 is moved axially to enforce frictional engagement between the friction plates 24 and 28, such that torque can be transmitted between the input housing 12 and the output hub 14. In a clutch, it is well known that this will be a rotary torque transmission, such that input torque imposed on the input housing 12 will be transmitted to the output hub 14, which in turn, is generally connected to a transmission gear member. Should it be desirable to operate the unit as a brake, the input housing 12 would be grounded to a stationary member, such as a transmission case, and again, the output hub 14 would be operatively or drivingly connected with a gear member in an effort to maintain the gear stationary during a predetermined gear ratio within the transmission, not shown. The operation of such devices is well known to those skilled in the art.

The friction plate 24 is shown in Figure 1A as an annular steel plate having a plurality of apertures 30 formed between an inner periphery 32 and an outer periphery 34 of the friction plate 24. These apertures 30 pass through the friction plate 24 to thereby provide fluid communication between opposite faces of the friction plate 24. The composite friction plate 28 is shown in Figure 1A as a composite member having a steel core 36 and friction materials 38 and 40 bonded to the steel core 36. The steel core 36 provides the spline teeth 42 which engage with the output hub 14. The friction materials 38 and 40 are quite often manufactured from a paper and resin compound and, as is well known, can be manufactured with a flat annular surface, such as that shown at 38 or can be manufactured with grooved surfaces either moulded integrally or machined into the surface.

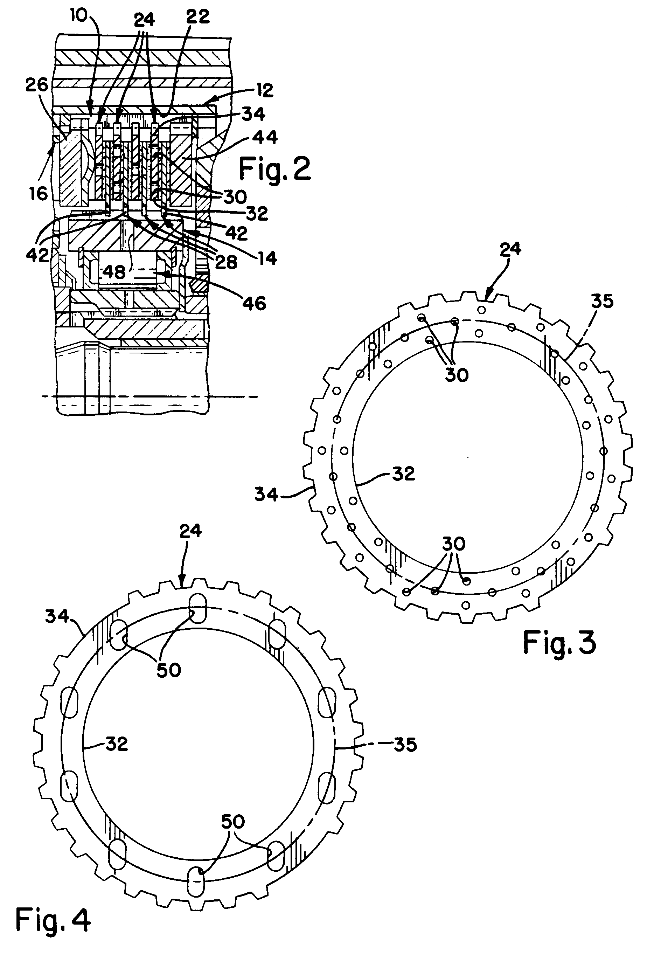

As seen in Figures 1 and 2, the friction plates 24 and 28 are alternately spaced within the input housing 12 to thereby fill an annular cavity formed between the pressure plate 26 and a backing plate 44. The output hub 14, which is depicted as the outer radius of a one-way device 46, has radially extending passages 48 which are operable to distribute lubrication and cooling fluid to the inner diameter of the friction plates 24 and 28. When the pressure in fluid chamber 18 is exhausted and the return spring assembly 20 causes the piston 16 to disengage from the pressure plate 26, a free running clearance is established within the clutch 10.

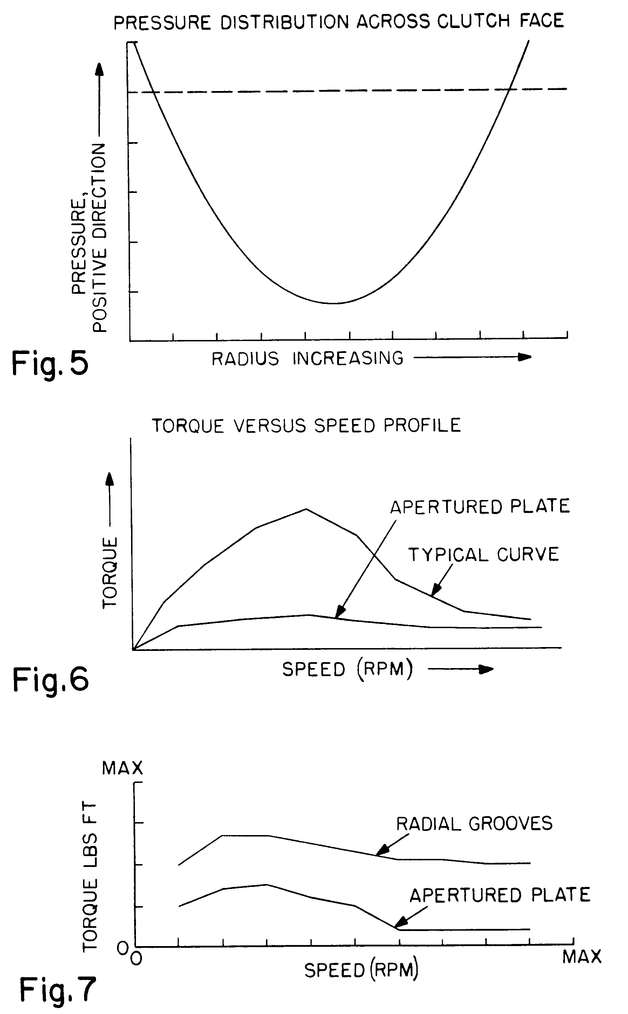

When the free running clearance is established, the friction plates 24 and 28 will attempt to separate. However, as seen in Figure 5, the pressure distribution across the annular face of the friction plates 24 and 28 will decrease to a minimum value at essentially the centre of the annular structure and then again increase to a higher value at the outer surface. This decrease in pressure is believed to create an attraction between adjacent surfaces, such that larger spaces will be created between some of the adjacent faces than others. This will result in increased drag or frictional torque transmission between the friction plates 24 and 28 when the clutch 10 is in an open running condition. It has been found that by providing the apertures 30 through one of the friction plates that the pressure balance is improved and the frictional torque transmission is greatly reduced during an open running condition.

The friction plate 24 shown in Figure 3 depicts the apertures 30 as being circular in cross section and distributed about the friction plate between the inner and outer peripheries 32 and 34, respectively. As seen in Figure 3, the apertures 30 are distributed such that a number of them, approximately one-third, encompass a radially central axis 35 of the friction plate 24.

A second embodiment of the friction plate 24, as shown in Figure 4, has a plurality of oval or oblong shaped apertures 50 distributed between the inner periphery 32 and the outer periphery 34. In both embodiments, the apertures provide for significant fluid distribution through the friction plate, such that adjacent juxtaposed faces of the friction plates 28 will be in pressure balance, thus reducing the attraction between the friction surfaces. As seen in Figure 4, the apertures 50 are positioned such that each aperture intersects with the radially central axis 35.

In the above discussion, the apertured friction plate has been shown as the solid steel plate 24, however, it is equally advantageous to provide the steel plate 24 as an unfenestrated device while the friction plate 28 with the frictional material 38 and 40 bonded thereto, is provided with apertures similar to those shown in Figures 3 and 4. In some instances, it will be less expensive to construct the plate with the apertures in the composite plate 28, in that less power and lighter equipment will be needed to pierce the composite plate 28 as compared with the energy required to pierce a heavy steel plate such as plate 24.

The graphs or charts shown in Figures 6 and 7 depict the performance of a friction device, such as a clutch, incorporating the apertured plate and a typical clutch assembly having unfenestrated flat annular surfaces. As can be seen in Figure 6, the prior art clutch assemblies exhibit a relatively high frictional or viscous drag torque value throughout a good portion of the speed range. It is this friction drag which reduces the transmission efficiency and therefore provides for increased cost in operation.

The present invention provides significant reduction in the open running condition from and energy transmission standpoint, and is therefore very advantageous. This is particularly true in transmissions which provide three or more speeds and may have as many as two or three open running friction devices at any given time.

The graph in Figure 7 is a comparison of the viscous torque drag over a conventional transmission speed range when comparing an apertured plate incorporating the present invention and a conventional clutch mechanism having radial grooves in one of the clutch plates. The radially grooved plate would normally be the composite plate 28, since it has been found that it is much less expensive to either preform the friction facing materials 38 and 40 with grooves or to machine the grooves into the friction material. However, as seen in Figure 4, even the use of radial grooves provides higher viscous losses within the transmission, such that the utilisation of the present invention provides a distinct advantage over this prior art structure.

The disclosures in United States patent application no. 008,437, from which this application claims priority, and in the abstract accompanying this application are incorporated herein by reference.

## Claims

1. A friction torque transmitting assembly (10) comprising a rotatable housing (12); a rotatable hub (14) concentric with the housing; a first plurality of friction plate means (24) drivingly connected with the housing, and each presenting a pair of annular friction drive transmitting surfaces; a second plurality of friction plate means (28) drivingly connected with the hub and each presenting a pair of annular friction drive transmitting surfaces juxtaposed in substantially continuous parallel relation with respective ones of the annular friction drive transmitting surfaces on the first plurality of friction plate means; means (48) for distributing lubrication and cooling fluid between the juxtaposed annular friction drive transmitting surfaces; and selectively operable piston means (16) for enforcing frictional engagement of the juxtaposed surfaces; characterised by a plurality of apertures (30,50) formed in the annular friction drive transmitting surfaces of one of the first or second plurality of friction plate means, and the annular friction drive transmitting surfaces of the other of the first or second plurality of friction plate means being continuous flat and unfenestrated; whereby the apertures permit fluid communication between pairs of juxtaposed annular friction drive transmitting surfaces when the friction torque transmitting assembly is selectively disengaged thereby reducing viscous friction drag between the first and second plurality of friction plate means.

2. A friction torque transmitting assembly as claimed in Claim 1, wherein the apertures (30) are comprised of a plurality of circular passages distributed about the one plurality of friction plate means (24,28) with at least one third of the passages being centred on a radius (35) substantially central of an inner (32) and outer (34) periphery of the friction plate means.

3. A friction torque transmitting assembly as claimed in Claim 1, wherein each of the one plurality of friction plate means (24) has an inner (32) and outer (34) periphery defining opposed annular faces and the apertures (50) are comprised of oblong passages interconnecting the opposed annular faces and encompass a portion of the friction plate means substantially radially central of the inner and outer periphery.
